# EUROPÄISCHE PATENTSCHRIFT

(11) **EP 1 832 676 B1**
(45) Veröffentlichungstag und Bekanntmachung des Hinweises auf die Patenterteilung: **26.08.2009**
(21) Anmeldenummer: 07004731.1
(22) Anmeldetag: 08.03.2007
(51) Int. Cl.: D04H 13/00, B32B 5/26

(54) **Neues Verbundmaterial**
New composite
Nouveau matériau composite

(30) Priorität: 11.03.2006 DE 102006011303
(43) Veröffentlichungstag der Anmeldung: 12.09.2007
(73) Patentinhaber: Johns Manville Europe GmbH, 86399 Bobingen (DE)
(72) Erfinder: Ketzer, Michael, 97903 Collenberg (DE); Albrecht, Annette, 97877 Wertheim (DE); Fahrenkrog, Antje, 97877 Wertheim (DE); Christensen, Bernd, Dr., 97877 Wertheim (DE); Stehlin, Thomas, Dr., 65830 Kriftel (DE)
(74) Vertreter: Luderschmidt, Schüler & Partner

(56) Entgegenhaltungen:
- EP-A- 1 495 807
- EP-A2- 1 134 479
- WO-A-94/16134
- DE-A1- 3 624 736
- DE-A1- 3 918 485
- DE-A1- 4 212 842
- US-A- 5 671 518
- US-A1- 2002 004 127
- US-A1- 2004 117 958

## Beschreibung

Die vorliegende Erfindung betrifft ein Verbundmaterial, ein Verfahren zu dessen Herstellung und dessen Verwendung

Thermischen Isolationsmaterialien sind seit langem bekannt. Je nach Temperatur finden hierbei verschiedene Materialien Anwendung. Es hat sich gezeigt, dass im Temperaturbereich von bis zu 550 bis 650°C Vliese auf Basis von Glasfasern eingesetzt werden können. Bei höheren Temperaturen finden Vliese auf Basis von Silika-, Keramik- oder Carbonfasern Anwendung.

Isolationsmaterialien auf Basis von Nadelfilzen aus Mineralfasern sind beispielsweise aus DE-A-3918485 und DE-A-4212842 bekannt.

Feuerbeständige Materialien aus einer Matrix enthaltend Basaltfasern und Glasfasern, bei denen die Glassfasern einen geringeren Durchmesser als die Basaltfasern aufweisen, sind aus US 2002/0004127 bekannt.

Hitzebeständige Verbundmaterialien aus Basaltfasergewebe und einem damit vernadelten Vlies aus hochtemperaturstabilen Fasern sind aus US 2004/0117958 bekannt.

Aus WO 94/16134 sind vernadelte, hitzebeständige Verbundmaterialien aus Mineralfasern und Glasfasern bekannt.

Die im Stand der Technik bekannten thermischen Isolationsmaterialien sind, insbesondere im Temperaturbereich von 700 bis 900°C unzureichend. Die relativ preisgünstig verfügbaren Isolationen auf Basis von Glasfasern halten diesen Temperaturen nicht Stand und die Eingangs beschriebenen Hochtemperatur-Isolationsmaterialien auf Basis von Silika-, Keramik- oder Carbonfasern sind relativ teuer bzw. überdimensioniert.

Es besteht daher ein Bedarf an Isolationsmaterialien, welche einerseits im Temperaturbereich von bis zu 900°C eingesetzt werden können und andererseits in kostengünstiger Weise realisiert werden können. Aufgrund des oftmals limitierten Platzes müssen derartige Isolierungen auch Raum- und Platz sparend realisierbar sein.

Es bestand somit die Aufgabe Verbundmaterialien bereitzustellen, welche die vorstehend genannten Nachteile nicht aufweisen und zudem in kostengünstiger weise herstellbar sind.

Gegenstand der vorliegenden Erfindung ist ein Verbundmaterial umfassend (i) mindestens ein mechanisch verfestigtes Krempelvlies aus Glasfasern und (ii) mindestens einseitig aufgebrachtes mechanisch verfestigtes Krempelvlies aus Mineralfasern mit höherer Temperaturbeständigkeit als das mechanisch verfestigte Krempelvlies aus Glasfasern, wobei das Krempelvlies aus Glasfasern und das Krempelvlies aus Mineralfasern miteinander.vernadelt sind.

Die im erfindungsgemäßen Verbundmaterial enthaltenen Krempelvliese aus Mineralfasern weisen keine Binder auf und sind ausschließlich durch Vernadelung - mittels Nadeln oder hydrodynamisch - verfestigt.

Die Krempelvliese aus Mineralfasern werden mit einer Nadeldichte bzw. Stichdichte von 20 bis 100 Stichen pro cm², vorzugsweise 30 bis 80 Stichen pro cm², vernadelt.

Mechanisch verfestigte Krempelvliese aus Mineralfasern - im Sinne der vorliegenden Erfindung - bestehen aus Alumosilikat-, Keramik-, Dolomitfasern oder Fasern von Vulkaniten wie z.B. Basalt-, Diabas-, Melaphyr. Diabase und Melaphyre werden zusammengefasst als Paläobasalte bezeichnet und Diabas wird auch gerne als Grünstein bezeichnet.

Die im erfindungsgemäßen Verbundmaterial enthaltenen Mineralfasern haben eine höhere Temperaturbeständigkeit als die Glasfasern.

Geeignete Mineralfasermaterialien sind überwiegend Alumosilikat-, Keramik-, Dolomitfasern oder aus Fasern von Vulkaniten wie z.B. Basalt-, Diabas-, Melaphyr, vorzugsweise Basalt-, Diabas- und/oder Melaphyrfasern, insbesondere Basaltfasern. Basaltfasern sind aufgrund ihrer guten mechanischen, chemischen und thermischen Eigenschaften bevorzugt. Aufgrund ihres hohen Schmelzpunktes von über 1300°C, ihrer hohen Moh's Härte (ca. 6,5), der geringen Wärmeleitfähigkeit, der großen chemischen Beständigkeit sind Basaltfasern ein hervorragendes Isolationsmaterial.

Das Mineralfaserkrempelvlies kann aus Filamenten, d.h. unendlich langen Fasern oder aus Stapelfasern gebildet werden. Die durchschnittliche Länge der Stapelfasern im erfindungsgemäß eingesetzten Krempelvlies aus Mineralfasern beträgt zwischen 40 und 100 mm, vorzugsweise 50 bis 90 mm.

Die Mineralfasern tragen üblicherweise eine Faserpräparation, welche der Fachmann mit bekannten Methoden auftragen kann.

Der durchschnittliche Durchmesser der Fasern im erfindungsgemäß eingesetzten Krempelvlies aus Mineralfasern beträgt zwischen 8 und 15 µm, vorzugsweise zwischen 10 und 12 µm.

Das Flächengewicht des erfindungsgemäß eingesetzten Krempelvlieses aus Mineralfasern beträgt zwischen 30 und 5000 g/m², vorzugsweise zwischen 200 und 4000 g/m². Je nach Anforderungsprofil kann das erfindungsgemäße Verbundmaterial auch mehr als ein Krempelvlies aus Mineralfasern aufweisen. Werden mehrere Vliese aus Mineralfasern im Verbundmaterial gewünscht, so werden diese i.d.R. miteinander vernadelt um ein Delaminieren des Verbundmaterials zu vermeiden. Die Vernadelung kann auch mittels hydrodynamischer Methoden erfolgen.

Die Rohdichte des Mineralfaserkrempelvliesstoffes im erfindungsgemäß erhaltenen Verbundmaterial beträgt zwischen 30 -200 kg/m³, insbesondere 60 - 180 kg/m³.

Das Glasfaserkrempelvlies kann aus Filamenten, d.h. unendlich langen Fasern oder aus Stapelfasern gebildet werden. Die durchschnittliche Länge der Stapelfasern im erfindungsgemäß eingesetzten Krempelvlies aus Glasfasern beträgt zwischen 40 und 100 mm, vorzugsweise 50 bis 90 mm.

Die Glasfasern tragen üblicherweise eine Faserpräparation, welche der Fachmann mit bekannten Methoden auftragen kann.

Der durchschnittliche Durchmesser der Fasern im erfindungsgemäß eingesetzten Krempelvlies aus Glasfasern beträgt zwischen 8 und 15 µm, vorzugsweise zwischen 10 und 12 µm.

Das Flächengewicht des erfindungsgemäß eingesetzten Krempelvlieses aus Glasfasern beträgt zwischen 30 und 5000 g/m², vorzugsweise zwischen 200 und 4000 g/m². Je nach Anforderungsprofil kann das erfindungsgemäße Verbundmaterial auch mehr als ein Krempelvlies aus Glasfasern aufweisen. Werden mehrere Krempelvliese aus Glasfasern im Verbundmaterial gewünscht, so werden diese i.d.R. miteinander vernadelt um ein Delaminieren des Verbundmaterials zu vermeiden. Die Vernadelung kann auch mittels hydrodynamischer Methoden erfolgen.

Die Rohdichte des Krempelvlieses aus Glasfasern im erfindungsgemäßen Verbundmaterial beträgt zwischen 30 - 200 kg/m³, insbesondere 60-180 kg/m³.

Die im erfindungsgemäßen Verbundmaterial enthaltenen Krempelvliese aus Glasfasern weisen keine Binder auf und sind ausschließlich durch Vemadelung - mittels Nadeln oder hydrodynamisch - verfestigt.

Die Krempelvliese aus Glasfasern werden mit einer Nadeldichte bzw. Stichdichte von 20 bis 100 Stichen pro cm², vorzugsweise 30 bis 80 Stichen pro cm², vernadelt.

Die im erfindungsgemäßen Verbundmaterial eingesetzten Krempelvliese aus Glasfasern und Mineralfasern mit höherer Temperaturbeständigkeit können jeweils unterschiedliche Flächengewichte und Rohdichten aufweisen. Darüber hinaus können sowohl das Vlies aus Glasfasern als auch das Vlies aus Mineralfasern Prägemuster aufweisen, mit denen Bereich unterschiedlicher Dichte im Vlies erzeugt werden.

Das erfindungsgemäße Verbundmaterial hat ein Flächengewicht zwischen 200 und 7000 g/m², vorzugsweise zwischen 600 und 4000 g/m², und eine Rohdichte zwischen 60 bis 400 kg/m³, vorzugsweise 60 bis 360 kg/m³, insbesondere 120 bis 360 kg/m³.

In einer bevorzugten Ausführungsform der Erfindung sind in den Verbundmaterial keine Binder, insbesondere keine schmelzbaren, organischen Binder, zugegen. Bevorzugt beträgt die Summe aller Binder, insbesondere die der organischen Binder, nicht mehr als 5 Gew.-%, insbesondere nicht mehr als 3 Gew.-%, bezogen auf das gesamte Verbundmaterial.

In einer weiteren Ausführungsform der Erfindung enthält das erfindungsgemäße Verbundmaterial nicht mehr als 5 Gew.-%, vorzugsweise nicht mehr als 3 Gew.-%, insbesondere nicht mehr als 2 Gew.-% Faserpräparation, bezogen auf das gesamte Verbundmaterial. Bei den vorstehend genannten handelt es sich um übliche Faserpräparationen auf organischer oder anorganischer Basis.

Die erfindungsgemäß eingesetzten Krempelvliese aus Glasfasern unterliegen hinsichtlich des Glastyps keiner wesentlichen Einschränkung, so dass grundsätzlich alle Glastypen wie E-Glas, S-Glas, R-Glas, C-Glas eingesetzt werden können. Aus wirtschaftlichen Gründen wird E-Glas oder C-Glas bevorzugt.

Die Herstellung des erfindungsgemäßen Verbundmaterials erfolgt durch Vernadelung von mindestens einem Mineralfaserkrempelvlieses mit höherer Temperaturbeständigkeit mit mindestens einem Glasfaserkrempelvlieses. Weiterhin ist es ebenfalls möglich das Verbundmaterial "online" herzustellen. In diesem Fall wird das Mineralfaserkrempelvliese unmittelbar nach bzw. gegen Ende der Herstellung des Glasfaserkrempelvlieses mit diesem verbunden oder umgekehrt.

Die Verbindung des Mineralfaserkrempelvlieses und des Glasfaserkrempelvlieses erfolgt durch Vernadelung, üblicherweise mit Filznadeln. Hierbei haben sich Nadel- bzw. Stichdichten von 20 bis 100 Stichen pro cm², vorzugsweise 30 bis 80 Stichen pro cm², bewährt.

Die Vernadelung erfolgt somit in einer solchen Art und Weise, dass eine Delaminierung der Krempelvliese aus Glasfasern und Mineralfasern verhindert wird.

Wie bereits ausgeführt, kann die oben genannte Vernadelung mittels Nadeln oder aber auch mittels einer hydrodynamischen Vernadelung durchgeführt werden. Das flüssige Medium unterliegt keiner Einschränkung, üblicherweise wird Wasser verwendet.

Insofern neben der thermischen Isolierung auch eine erhöhte, mechanische Belastbarkeit (Dimensionsstabilität) der Isolierung gewünscht ist, kann zusätzlich eine Verstärkungsschicht eingebracht werden. Hierzu kann ein textiles Flächengebilde beispielsweise ein Gewebe, Gelege oder Gestrick aus Glas oder aus Mineralfasern mit höherer Temperaturbeständigkeit auf das Glasfaserkrempelvlies, auf das Mineralfaserkrempelvlies oder zwischen das werden. Zur Vermeidung von Delaminierungseffekten wird die Verstärkungsschicht vorzugsweise vor der Verbindung der verschiedenen Krempelvliese eingebracht und somit in gleicher Weise wie das Mineralfaserkrempelvlies verbunden. Grundsätzlich kann die zusätzliche Verstärkungsschicht auch nachträglich aufgebracht werden, je nach wirtschaftlicher Notwendigkeit.

Das erfindungsgemäße Verbundmaterial weist wenigstens ein einseitig aufgebrachtes Mineralfaserkrempelvlies auf das Glassfaserkrempelvlies auf, wodurch gewährleistet wird, dass diese die darunter liegenden Glasfasern vor hohen Temperaturen, insbesondere solchen über 550 bis 650°C, schützt, so dass ein Glasfaserkrempelvlies mit einem derartigen Mineralfaserkrempelvlies-Verbund zur Hochtemperaturdämmung einsetzbar ist, ohne dass eine Desintegration der Fasern zu befürchten ist.

Die erfindungsgemäßen Verbundmaterialien sind als Wärmedämmung insbesondere in der Hochtemperaturisolierung von Gas- und Elektroöfen, Brennern, Backstrassen, Dampfgarern, Abgasanlagen, Katalysatorgehäusen hervorragend geeignet.

## Patentansprüche

1. Verbundmaterial umfassend (i) mindestens ein mechanisch verfestigtes Krempelvlies aus Glasfasern und (ii) mindestens einseitig aufgebrachtes mechanisch verfestigtes Krempelvlies aus Mineralfasern mit höherer Temperaturbeständigkeit als das mechanisch verfestigte Krempelvlies aus Glasfasern, wobei das Krempelvlies aus Glasfasern und das Krempelvlies aus Mineralfasern miteinander vernadelt ist.

2. Verbundmaterial gemäß Anspruch 1, **dadurch gekennzeichnet, dass** das Glasfaserkrempelvlies Glasfasern mit einer Länge zwischen 40 und 100 mm aufweist.

3. Verbundmaterial gemäß Anspruch 1 oder 2, **dadurch gekennzeichnet, dass** das Glasfaserkrempelvlies Glasfasern mit einem durchschnittlichen Durchmesser zwischen 8 und 15 µm aufweist.

4. Verbundmaterial gemäß einem der Ansprüche 1 bis 3, **dadurch gekennzeichnet, dass** das Flächengewicht des mechanisch verfestigten Krempelvlieses aus Glasfasern zwischen 30 und 5000 g/m² beträgt.

5. Verbundmaterial gemäß einem der Ansprüche 1 bis 4, **dadurch gekennzeichnet, dass** die Rohdichte des Krempelvlieses aus Glasfasern zwischen 30-200 kg/m³, insbesondere 60-180 kg/m³ beträgt.

6. Verbundmaterial gemäß einem der Ansprüche 1 bis 5, **dadurch gekennzeichnet, dass** es mehrere Krempelvliese aus Mineralfasern umfasst.

7. Verbundmaterial gemäß einem der Ansprüche 1 bis 6, **dadurch gekennzeichnet, dass** es mehrere Krempelvliese aus Glasfasern umfasst.

8. Verbundmaterial gemäß einem der Ansprüche 1 bis 7, **dadurch gekennzeichnet, dass** als Mineralfasern Alumosilikat-, Keramik-, Dolomitfasern oder Fasern von Vulkaniten, insbesonder Basalt-, Diabas-, Melaphyr, eingesetzt werden.

9. Verbundmaterial gemäß Anspruch 8, **dadurch gekennzeichnet, dass** als Mineralfaser Vulkanite wie Basalt-, Diabas- und/oder Melaphyrfasern, insbesondere Basaltfasern, eingesetzt werden.

10. Verbundmaterial gemäß einem der Ansprüche 1 bis 9, **dadurch gekennzeichnet, dass** die Glas- und Mineralfasern eine Faserpräparation auf organischer und/oder anorganischer Basis enthalten.

11. Verbundmaterial gemäß Anspruch 10, **dadurch gekennzeichnet, dass** die Faserpräparation einen Anteil von nicht mehr als 5 Gew.-% aufweist.

12. Verbundmaterial gemäß einem der Ansprüche 1 bis 11, **dadurch gekennzeichnet, dass** das Mineralfaserkrempelvlieses aus Filamenten oder aus Stapelfasern gebildet wird.

13. Verbundmaterial gemäß Anspruch 12, **dadurch gekennzeichnet, dass** die durchschnittliche Länge der Stapelfasern zwischen 40 und 100 mm beträgt.

14. Verbundmaterial gemäß einem der Ansprüche 1 bis 13, **dadurch gekennzeichnet, dass** der durchschnittliche Durchmesser der Fasern des Vlieses aus Mineralfasern zwischen 8 und 15 µm beträgt.

15. Verbundmaterial gemäß einem der Ansprüche 1 bis 14, **dadurch gekennzeichnet, dass** das Flächengewicht des Krempelvlieses aus Mineralfasern zwischen 30 und 5000 g/m² beträgt.

16. Verbundmaterial gemäß einem der Ansprüche 1 bis 15, **dadurch gekennzeichnet, dass** die Rohdichte des Krempelvlieses aus Mineralfasern im Verbundmaterial zwischen 30-200 kg/m³, insbesondere 60-180 kg/m³ beträgt.

17. Verbundmaterial gemäß einem der Ansprüche 1 bis 16, **dadurch gekennzeichnet, dass** das Verbundmaterial aus einem oder mehreren mechanisch verfestigten Glasfaserkrempelvliesen und einem oder mehreren mechanisch verfestigen Mineralfaserkrempelvliese gebildet wird.

18. Verbundmaterial gemäß Anspruch 17, **dadurch gekennzeichnet, dass** die Glasfaserkrempelvliese und die Mineralfaserkrempelvliese jeweils unterschiedliche Flächengewichte und Rohdichten aufweisen.

19. Verbundmaterial gemäß einem, der Ansprüche 1 bis 18, **dadurch gekennzeichnet, dass** das Verbundmaterial ein Flächengewicht zwischen 200 und 7000 g/m² aufweist.

20. Verbundmaterial gemäß einem der Ansprüche 1 bis 19, **dadurch gekennzeichnet, dass** das Verbundmaterial eine Rohdichte zwischen 60-400 kg/m³, insbesondere 120-360 kg/m³, aufweist.

21. Verbundmaterial gemäß Anspruch 1, **dadurch gekennzeichnet, dass** das Verbundmaterial keine schmelzbaren, organischen Binder aufweist.

22. Verbundmaterial gemäß Anspruch 1, **dadurch gekennzeichnet, dass** die Summe aller organischen Binder im Verbundmaterial nicht mehr als 5 Gew.-% beträgt.

23. Verbundmaterial gemäß Anspruch 1, **dadurch gekennzeichnet, dass** die Vernadelung mit Filznadeln und/oder durch hydrodynamische Vernadelung erfolgt.

24. Verbundmaterial gemäß einem der Ansprüche 1 bis 23, **dadurch gekennzeichnet, dass** es zusätzlich mindestens eine Verstärkungsschicht aufweisen kann.

25. Verbundmaterial gemäß Anspruch 24, **dadurch gekennzeichnet, dass** die Verstärkungsschicht ein Gewebe, Gelege oder Gestrick, vorzugsweise aus Glas- und/oder Mineralfasern mit höherer Temperaturbeständigkeit, ist.

26. Verwendung des Verbundmaterials definiert in einem der Ansprüche 1 bis 25 als Isolationsmaterial.

27. Isolierung enthaltend ein Verbundmaterial definiert in einem der Ansprüche 1 bis 25.

## Claims

1. A composite comprising (i) at least one mechanically bonded, carded non-woven made of glass fibres and (ii) at least one unilaterally applied, mechanically bonded, carded non-woven made of mineral fibres having a higher temperature stability than the mechanically bonded, carded non-woven made of glass fibres, the carded non-woven made of glass fibres and the carded non-woven made of mineral fibres being needled to each other.

2. The composite according to claim 1, **characterized in that** the carded glass-fibre non-woven has glass fibres having a length of between 40 and 100 mm.

3. The composite according to claim 1 or 2, **characterized in that** the carded glass-fibre non-woven has glass fibres having an average diameter of between 8 and 15 µm.

4. The composite according to any one of claims 1 to 3, **characterized in that** the mass per unit area of the mechanically bonded, carded non-woven made of glass fibres is between 30 and 5,000 g/m².

5. The composite according to any one of claims 1 to 4, **characterized in that** the bulk density of the carded non-woven made of glass fibres is between 30 and 200 kg/m³, in particular 60 and 180 kg/m³.

6. The composite according to any one of claims 1 to 5, **characterized in that** it comprises several carded non-wovens made of mineral fibres.

7. The composite according to any one of claims 1 to 6, **characterized in that** it comprises several carded non-wovens made of glass fibres.

8. The composite according to any one of claims 1 to 7, **characterized in that** alumosilicate, ceramic, dolomite fibres or fibres from vulcanites, in particular basalt, diabase, melaphyre, are used as mineral fibres.

9. The composite according to claim 8, **characterized in that** vulcanites, such as basalt, diabase and/or melaphyre fibres, in particular basalt fibres, are used as mineral fibres.

10. The composite according to any one of claims 1 to 9, **characterized in that** the glass and mineral fibres contain a fibre finish based on organic and/or inorganic substances.

11. The composite according to claim 10, **characterized in that** the fibre finish represents a proportion of no more than 5% by weight.

12. The composite according to any one of claims 1 to 11, **characterized in that** the carded mineral-fibre non-woven is formed from filaments or from staple fibres.

13. The composite according to Claim 12, **characterized in that** the average length of the staple fibres is between 40 and 100 mm.

14. The composite according to any one of claims 1 to 13, **characterized in that** the average diameter of the fibres of the non-woven made of mineral fibres is between 8 and 15 µm.

15. The composite according to any one of claims 1 to 14, **characterized in that** the mass per unit area of the carded non-woven made of mineral fibres is between 30 and 5,000 g/m².

16. The composite according to any one of claims 1 to 15, **characterized in that** the bulk density of the carded non-woven made of mineral fibres in the composite is between 30 and 200 kg/m³, in particular 60 and 180 kg/m³.

17. The composite according to any one of claims 1 to 16, **characterized in that** the composite is formed from one or more mechanically bonded, carded glass-fibre non-wovens and one or more mechanically bonded, carded mineral-fibre non-wovens.

18. The composite according to claim 17, **characterized in that** the carded glass-fibre non-wovens and the carded mineral-fibre non-wovens each have different masses per unit area and bulk densities.

19. The composite according to any one of claims 1 to 18, **characterized in that** the composite has a mass per unit area of between 200 and 7,000 g/m².

20. The composite according to any one of claims 1 to 19, **characterized in that** the composite has a bulk density of between 60 and 400 kg/m², in particular 120 and 360 kg/m².

21. The composite according to claim 1, **characterized in that** the composite contains no meltable organic binder.

22. The composite according to claim 1, **characterized in that** the sum of all the organic binders in the composite is no more than 5% by weight.

23. The composite according to claim 1, **characterized in that** the needling is performed with felt needles and/or by hydrodynamic needling.

24. The composite according to any one of claims 1 to 23, **characterized in that** it can additionally have at least one reinforcing layer.

25. The composite according to claim 24, **characterized in that** the reinforcing layer is a woven fabric, scrim or knitted fabric, preferably made of glass and/or mineral fibres having a higher temperature stability.

26. The use of the composite as defined in any one of claims 1 to 25 as an insulation material.

27. Insulation containing a composite as defined in any one of claims 1 to 25.

## Revendications

1. Nouveau matériau composite (i) comprenant au moins un non-tissé cardé mécaniquement renforcé de fibres optiques et (ii) au moins un non-tissé cardé mécaniquement renforcé appliqué sur un côté et composé de fibres minérales avec résistance thermique supérieur au non-tissé cardé mécaniquement renforcé de fibres optiques, étant le non-tissé cardé de fibres optiques et le non-tissé de fibres minérales connectés l'un à l'autre à l'aide d' épingles.

2. Nouveau matériau composite tel qu'en revendication 1, **caractérisé en ce que** le non-tissé cardé de fibres optiques est composé de fibres optiques de la longueur entre 40 et 100 mm.

3. Nouveau matériau composite tel que dans les revendications 1 ou 2, **caractérisé en ce que** le non-tissé cardé de fibres optiques est composé de fibres optiques d'un diamètre moyen compris entre 8 et 15 *µ*m.

4. Nouveau matériau composite tel que dans une des revendications de 1 à 3, **caractérisé en ce que** le poids en surface du non-tissé cardé de fibres optiques mécaniquement renforcé se monte entre 30 et 5000 g/m².

5. Nouveau matériau composite tel que dans une des revendications de 1 à 4, **caractérisé en ce que** la masse volumique apparente du non- tissé cardé de fibres optiques se monte entre 30 et 200 kg/m³, et en particulier entre 60 et 180 kg/m³.

6. Nouveau matériau composite tel que dans une des revendications de 1 à 5, **caractérisé en ce qu'**il comprend plusieurs non-tissés cardés de fibres minérales.

7. Nouveau matériau composite tel que dans une des revendications de 1 à 6, **caractérisé en ce qu'**il comprend plusieurs non-tissés cardés de fibres optiques.

8. Nouveau matériau composite tel que dans une des revendications de 1 à 7, **caractérisé en ce que** comme fibres minérales on utilise de fibres en silicate d'aluminium, en céramique, en dolomite ou fibres en vulcanites, en particulier en basalte, diabase, mélaphyre.

9. Nouveau matériau composite tel que dans la revendication 8, **caractérisé en ce que** comme fibres minérales on utilise de fibres vulcanites, comme fibres de basalte, de diabase et/ou de mélaphyre et en particulier de fibres de basalte.

10. Nouveau matériau composite tel que dans une des revendications de 1 à 9, **caractérisé en ce que** les fibres optiques et les fibres minérales contiennent un préparât de fibres sur base organique et/ou inorganique.

11. Nouveau matériau composite tel que dans la revendication 10, **caractérisé en ce que** le préparât de fibres ne comprend pas une partie supérieure que 5 %.

12. Nouveau matériau composite tel que dans une des revendications de 1 à 11, **caractérisé en ce que** le non-tissé carde de fibres minérales est constitué par de filaments ou de fibres empilés.

13. Nouveau matériau composite tel que dans la revendication 12, **caractérisé en ce que** la longueur moyenne des fibres empilés se monte entre 40 et 100 mm.

14. Nouveau matériau composite tel que dans une des revendications de 1 à 13, **caractérisé en ce que** le diamètre moyen des fibres du non-tissé de fibres minérales se monte entre 8 et *µ*m.

15. Nouveau matériau composite tel que dans une des revendications de 1 à 14, **caractérisé en ce que** le poids en surface du non-tissé cardé de fibres minérales se monte entre 30 et 5000 g/m².

16. Nouveau matériau composite tel que dans une des revendications de 1 à 15, **caractérisé en ce que** la masse volumique apparente du non- tissé cardé de fibres minérales se monte entre 30 et 200 kg/m³, et en particulier entre 60 et 180 kg/m³.

17. Nouveau matériau composite tel que dans une des revendications de 1 à 16, **caractérisé en ce que** le nouveau matériau composite est constitué par plusieurs non-tissés cardés de fibres optiques mécaniquement renforcés et par un ou plusieurs non-tissés cardés de fibres minérales mécaniquement renforcés.

18. Nouveau matériau composite tel que dans la revendication 17, **caractérisé en ce que** les non-tissés cardés de fibres optiques et les non-tissés cardés de fibres minérales comportent des poids différents en surface et de masses volumiques apparentes différentes.

19. Nouveau matériau composite tel que dans une des revendications de 1 à 18, **caractérisé en ce que** le nouveau matériau composite comporte un poids en surface entre 200 et 7000 g/m².

20. Nouveau matériau composite tel que dans une des revendications de 1 à 19, **caractérisé en ce que** le nouveau matériau composite comporte une masse volumique apparente entre 60 et 400 kg/m³, et en particulier entre 120 et 360 kg/m³.

21. Nouveau matériau composite tel que dans la revendication 1, **caractérisé en ce que** le nouveau matériau composite ne comporte pas de lieurs organiques fusibles.

22. Nouveau matériau composite tel que dans la revendication 1, **caractérisé en ce que** la somme des tous les lieurs organiques contenus dans le matériau composite n'a pas un poids supérieur à 5 % du poids total.

23. Nouveau matériau composite tel que dans la revendication 1, **caractérisé en ce que** la connexion par épingles est exécutée par des épingles de feutre et/ou par connexion par épingles hydrodynamique.

24. Nouveau matériau composite tel que dans une des revendications de 1 à 23, **caractérisé en ce qu'**il peut comporter au moins une couche additionnelle de renforcement.

25. Nouveau matériau composite tel que dans la revendication 24, **caractérisé en ce que** la couche de renforcement est un tissue, une ponte ou une corde, de préférence en fibres optiques et/ou en fibres minérales avec résistance supérieure à la température.

26. Utilisation du nouveau matériau composite défini dans une des revendications 1 à 25 comme matériau d'isolation.

27. Isolation contenant un matériau composite défini dans une des revendications 1 à 25.
